# EUROPEAN PATENT APPLICATION

(11) **EP 1 912 120 A1**
(43) Date of publication of application: **16.04.2008**
(21) Application number: 05816513.5
(22) Date of filing: 15.12.2005
(51) Int. Cl.: G06F 11/00

(54) **DEVICE FOR WRITING INTO MEMORY**

(30) Priority: 29.07.2005 JP 2005221993
(71) Applicant: MATSUSHITA ELECTRIC INDUSTRIAL CO., LTD., Osaka 571-8501 (JP)
(72) Inventor: OSAKA, Masataka c/o Matsushita Electric Industrial Co., Ltd., 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2005/023068
(87) International publication number: WO 2007/013191

(57) **Abstract**

After power-on, the start-up of a CPU **112** is suppressed by a microcomputer start-up suppressing/DMA start-up controlling device **101.** Before the start-up of the CPU **112**, a program read by a memory card I/F **103** is written in a writable ROM **105** by a DMA controlling device **102.** After the start-up of the CPU **112,** the CPU **112** executes the program written in the writable ROM **105.**

## Description

### TECHNICAL FIELD

The present invention relates to a memory writing device for downloading programs to a blank writable ROM, which is mounted on the substrate during the manufacturing process.

### BACKGROUND ART

Conventionally, in order to download a program to a blank writable ROM, which is mounted on the substrate in the manufacturing stage, a dedicated downloading contact is provided on the substrate, whereby necessary information is written to the writable ROM via the contact.

Another approach is to write necessary information to the writable ROM by means of a special program device and then mount the writable ROM on the substrate.

Moreover, Patent Document 1 discloses a method for booting from an NAND-type memory device, wherein programs are provided therein in advance for devices connected thereto.
Patent Document 1: Japanese Laid-Open Patent Publication No. 2003-271391

### DISCLOSURE OF THE INVENTION

### Problems To Be Solved By The Invention

In a system of digital AV equipment, such as a digital TV or a set-top box (STB), which includes a Chinese character font ROM (mask ROM) for marketing in Japan, a start-up program or a program for a writable ROM may be provided by using a part of the mask ROM.

However, such a font ROM is not needed in a system to be marketed overseas. Therefore, in order to realize a system configuration that only includes the writable ROM, it is necessary to write a program to the writable ROM in advance or to provide a dedicated downloading contact on the set substrate on which the writable ROM is mounted, as described above, resulting in an increase in the production cost. Moreover, since the dedicated downloading contact will not particularly be needed after the substrate is made into a product, it is preferred to avoid providing the dedicated downloading contact if possible.

The present invention, which has been made in view of the above, has an object to make is possible to download a necessary program to a blank writable ROM mounted on the substrate without suppressing the cost increase.

### Means For Solving The Problems

Specifically, the present invention is directed to a memory writing device for writing a program to be executed by a CPU in a blank writable ROM mounted on a substrate, comprising:
a memory card I/F device for reading the program, which is pre-recorded on an external memory card;
a CPU start-up control section for suppressing and controlling start-up of the CPU; and
a DMA device for transferring, in a DMA transfer, the program read by the memory card I/F device before the start-up of the CPU.

### Effects Of The Invention

As described above, according to the present invention, it is no longer necessary to provide a special jig, or to provide a dedicated downloading contact on the set substrate on which the writable ROM is mounted. Thus, by downloading a program to a blank writable ROM by using a memory card I/F, such as an SD memory card, which is normally provided in a set system, it is possible to provide a memory writing device for programming a writable ROM when shipping the set product, thus realizing advantageous effects in reducing the cost for providing a program in a writable ROM in advance or the cost for a substrate.

### BRIEF DESCRIPTION OF THE DRAWINGS

[FIG. **1**] FIG. **1** is a block diagram showing a configuration of a memory writing device according to Embodiment 1 of the present invention.
[FIG. **2**] FIG. **2** is a diagram showing a procedure of writing a program by using a memory writing device of Embodiment 1.
[FIG. **3**] FIG. **3** is a block diagram showing a configuration of a memory writing device of Embodiment 2.
[FIG. **4**] FIG. **4** is a block diagram showing a configuration of a memory writing device of Embodiment 3.
[FIG. **5**] FIG. **5** is a diagram showing a procedure of writing a program by using the memory writing device of Embodiment 3.
[FIG. **6**] FIG. **6** is a block diagram showing a configuration of a memory writing device of Embodiment 4.
[FIG. **7**] FIG. **7** is a block diagram showing a configuration of a memory writing device of Embodiment 5.
[FIG. **8**] FIG. **8** is a block diagram showing a configuration of a memory writing device of Embodiment 6.
[FIG. **9**] FIG. **9** is a block diagram showing a configuration of a memory writing device of Embodiment 7.
[FIG. **10**] FIG. **10** is a block diagram showing a configuration of a memory writing device of Embodiment 8.
[FIG. **11**] FIG. **11** is a block diagram showing a configuration of a memory writing device of Embodiment 9.
[FIG. **12**] FIG. **12** is a diagram showing a procedure of writing a program by using the memory writing device of Embodiment 9.
[FIG. **13**] FIG. **13** is a block diagram showing a configuration of a memory writing device of Embodiment 10.

### DESCRIPTION OF REFERENCE NUMERALS

- 101: Microcomputer start-up suppressing/DMA start-up controlling device
- 102: DMA controlling device
- 104: External memory card
- 105: Writable ROM
- 112: CPU
- 113: Instruction cache memory
- 401: Data path
- 601: SRAM device
- 701: Serial I/F device
- 702: Serial communication device
- 703: Download program memory
- 704: Communication device
- 705: Serial I/F
- 901: Network I/F device
- 902: Network communication device
- 903: Download program memory
- 904: Communication device
- 905: Network I/F
- 1201: Internal ROM

### BEST MODE FOR CARRYING OUT THE INVENTION

Embodiments of the present invention will now be described with reference to the drawings. The following description of the preferred embodiments of the present invention is merely illustrative in nature, and is in no way intended to restrict the present invention, applications or usage thereof.

### <Embodiment 1>

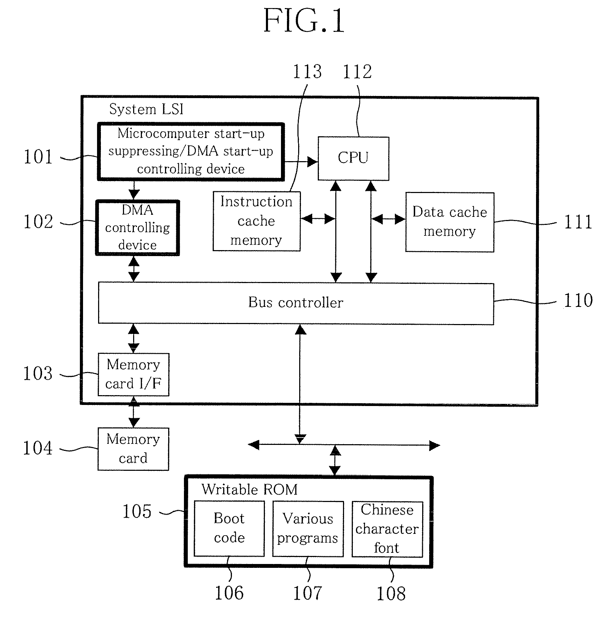

FIG. **1** is a block diagram showing a configuration of a memory writing device according to Embodiment 1 of the present invention. The memory writing device of FIG. **1** includes a microcomputer start-up suppressing/DMA start-up controlling device **101,** a DMA controlling device **102,** a memory card I/F **103** for exchanging data with an inserted external memory card **104,** a bus controller **110** for performing a control so as to transfer data read out by the memory card I/F **103** to a writable ROM **105,** a data cache memory **111,** a CPU **112** for executing instructions, and an instruction cache memory **113.**

The microcomputer start-up suppressing/DMA start-up controlling device **101** is a device for suppressing the start-up of the CPU **112** and instructing the DMA controlling device **102** to start up a DMA process.

The DMA controlling device **102** is a device for transferring necessary programs, such as a start-up program and application programs, recorded on the external memory card **104.**

Although a boot-up program (BOOT code) **106,** various programs **107** and Chinese character font data **108** are already written in the writable ROM **105** in FIG. **1**, the writable ROM **105** is initially in a blank state.

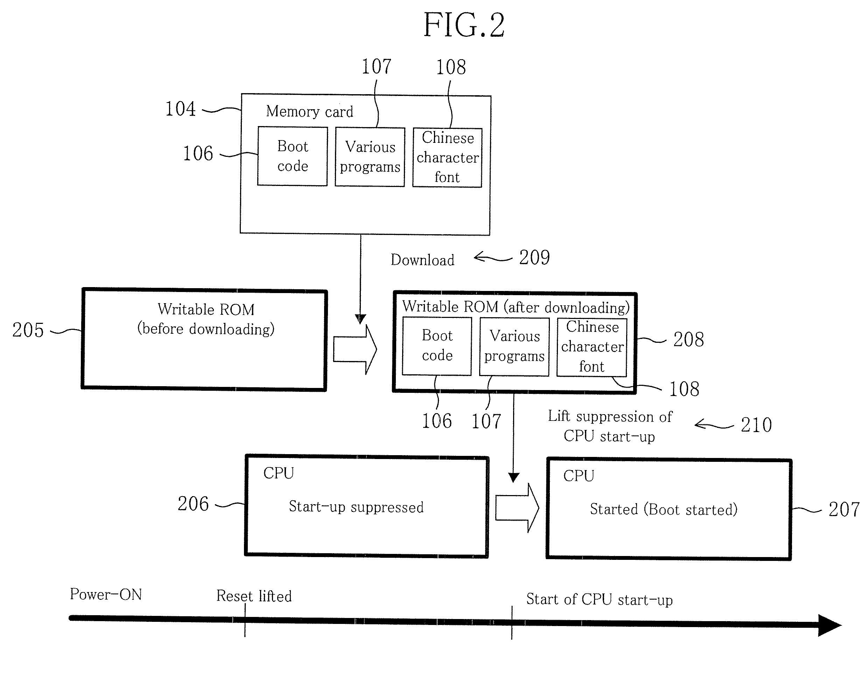

Next, a procedure of writing a program by using the memory writing device of Embodiment 1 will be described with reference to FIG. **2****.**

First, when the power is turned ON and the reset is lifted after power-on, the CPU **112** enters a state **206** where the start-up thereof is suppressed by the microcomputer start-up suppressing/DMA start-up controlling device **101.** At this point, the inside of the writable ROM **105,** which is arranged in an address space from which the start-up program of the CPU **112** should be read out, is in a blank state **205** where the start-up program has not been written therein.

Next, the microcomputer start-up suppressing/DMA start-up controlling device **101** instructs the DMA controlling device **102** to start up a DMA process to thereby start a download **209** of the start-up program.

Herein, a read address and a write address need to be initialized in the DMA controlling device **102** for a data transfer from the external memory card **104,** in which necessary programs such as a start-up program and application programs are written in advance, to the writable ROM **105.**

After the DMA controlling device **102** starts up, data is transferred from the external memory card **104** to the writable ROM **105,** and the writable ROM **105** enters a state **208** where the boot-up program **106,** the various programs **107** and the Chinese character font data **108** have been transferred thereto.

When the data transfer is complete, the DMA controlling device **102** notifies the microcomputer start-up suppressing/DMA start-up controlling device **101** of the completion of the data transfer. Then, the microcomputer start-up suppressing/DMA start-up controlling device **101** lifts **210** the suppression of the start-up of the CPU **112,** thereby entering a state **207** where the boot-up of the CPU **112** has started, after which the process transitions to a state where application software has been started.

### <Embodiment 2>

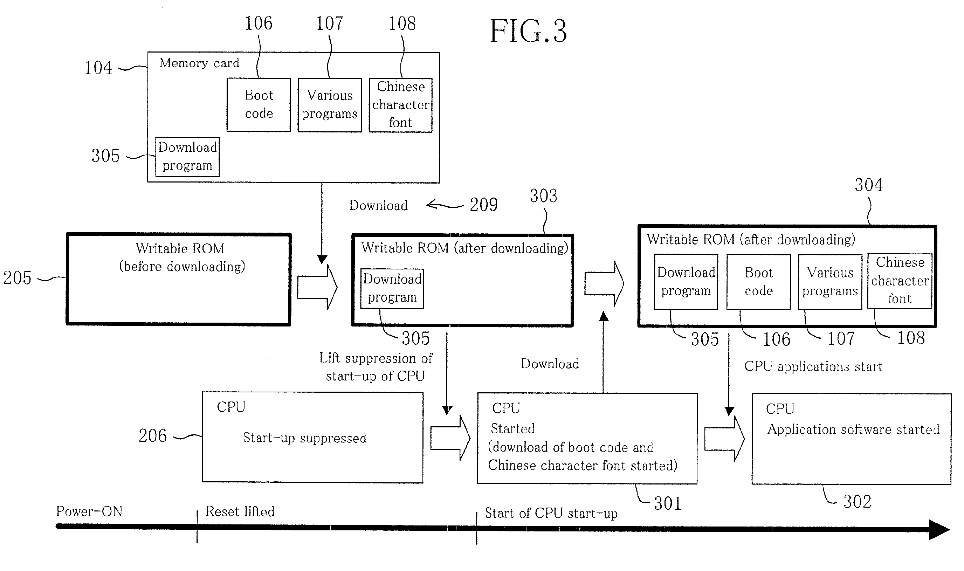

FIG. **3** is a diagram showing a procedure of writing a program by using the memory writing device according to Embodiment 2 of the present invention. It is assumed that the memory writing device used in Embodiment 2 is the same as that of Embodiment 1. Hereinafter, like elements to those of Embodiment 1 will be denoted by like reference numerals, and only differences between these embodiments will be discussed below.

First, when the power is turned ON and the reset is lifted after power-on, the CPU **112** enters a state **206** where the start-up thereof is suppressed by the microcomputer start-up suppressing/DMA start-up controlling device **101.** At this point, the inside of the writable ROM **105,** which is arranged in an address space from which the start-up program of the CPU **112** should be read out, is in a blank state **205** where the start-up program has not been written therein.

Next, the microcomputer start-up suppressing/DMA start-up controlling device **101** instructs the DMA controlling device **102** to start up a DMA process to thereby start the download **209** of the start-up program.

Herein, a read address and a write address need to be initialized in the DMA controlling device **102** for a data transfer from the external memory card **104,** in which necessary programs such as a start-up program and application programs are written in advance, to the writable ROM **105.** In this process, the DMA controlling device **102** is set so as to transfer only a download program **305.**

After the DMA controlling device **102** starts up, data is transferred from the external memory card **104** to the writable ROM **105,** and the writable ROM **105** enters a state **303** where only the download program **305** has been transferred thereto.

When the data transfer is complete, the DMA controlling device **102** notifies the microcomputer start-up suppressing/DMA start-up controlling device **101** of the completion of the data transfer. Then, the microcomputer start-up suppressing/DMA start-up controlling device **101** lifts **210** the suppression of the start-up of the CPU **112,** thereby entering a state **301** where the start-up of the CPU **112** has started.

Then, based on the download program **305** written in the writable ROM **105,** the CPU **112** itself reads out the boot-up program **106,** the various programs **107** and the Chinese character font data **108,** which are stored in the external memory card **104,** and transfers them to the writable ROM **105,** thus entering a state **304** where necessary data have been written in the writable ROM **105.**

When the data transfer to the writable ROM **105** is complete, the CPU **112** passes the control back to the boot-up program, thus entering a state where the boot-up has started, after which the process transitions to a state **302** where application software has been started.

### <Embodiment 3>

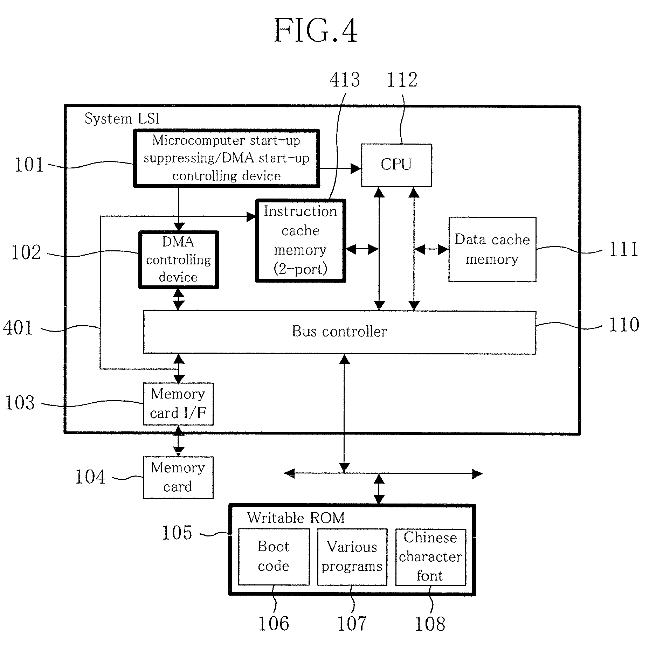

FIG. **4** is a block diagram showing a configuration of a memory writing device according to Embodiment 3 of the present invention. A difference from Embodiment 1 is that a data path for transferring data read out by the memory card I/F to a 2-port instruction cache memory is provided. Hereinafter, like elements to those of Embodiment 1 will be denoted by like reference numerals, and only differences between these embodiments will be discussed below.

As shown in FIG. **4****,** reference numeral **413** denotes a 2-port-control instruction cache memory, to/from which data can be written/read out by the CPU **112** and to which data can be written by the DMA controlling device **102.** The instruction cache memory **413** is connected to the memory card I/F **103** via a data path **401,** whereby data read out by the memory card I/F **103** is transferred thereto.

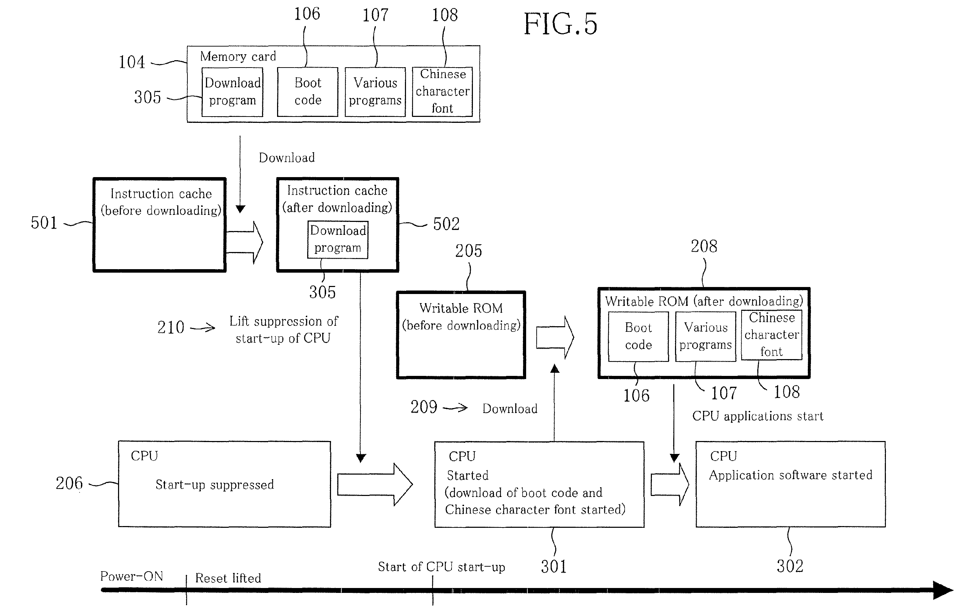

Next, a procedure of writing a program by using the memory writing device of Embodiment 3 will be described with reference to FIG. **5****.**

First, when the power is turned ON and the reset is lifted after power-on, the CPU **112** enters a state **206** where the start-up thereof is suppressed by the microcomputer start-up suppressing/DMA start-up controlling device **101.** At this point, the inside of the writable ROM **105,** which is arranged in an address space from which the start-up program of the CPU **112** should be read out, is in a blank state **205** where the start-up program has not been written therein. The instruction cache memory **413** is similarly in a blank state **501.**

Next, the microcomputer start-up suppressing/DMA start-up controlling device **101** instructs the DMA controlling device **102** to start up a DMA process to thereby start the download **209** of the start-up program.

Herein, a read address and a write address need to be initialized in the DMA controlling device **102** for a data transfer from the external memory card **104,** in which necessary programs such as a start-up program and application programs are written in advance, to the instruction cache memory **113.** In this process, the DMA controlling device **102** is set so as to transfer only a download program **305.**

After the DMA controlling device **102** starts up, data is transferred from the external memory card **104** to the instruction cache memory **413** via the data path **401,** and the instruction cache memory **413** enters a state **502** where only the download program **305** has been transferred thereto.

When the data transfer to the instruction cache memory **113** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts **210** the suppression of the start-up of the CPU **112,** thereby entering the state **301** where the start-up of the CPU **112** has started.

Then, based on the download program **305** written in the instruction cache memory **413,** the CPU **112** itself reads out the boot-up program **106,** the various programs **107** and the Chinese character font data **108,** which are stored in the external memory card **104,** and transfers them to the writable ROM **105,** thus entering a state **208** where necessary data have been written in the writable ROM **105.**

When the data transfer to the writable ROM **105** is complete, the CPU **112** passes the control back to the boot-up program, thus entering a state where the boot-up has started, after which the process transitions to the state **302** where application software has been started.

### <Embodiment 4>

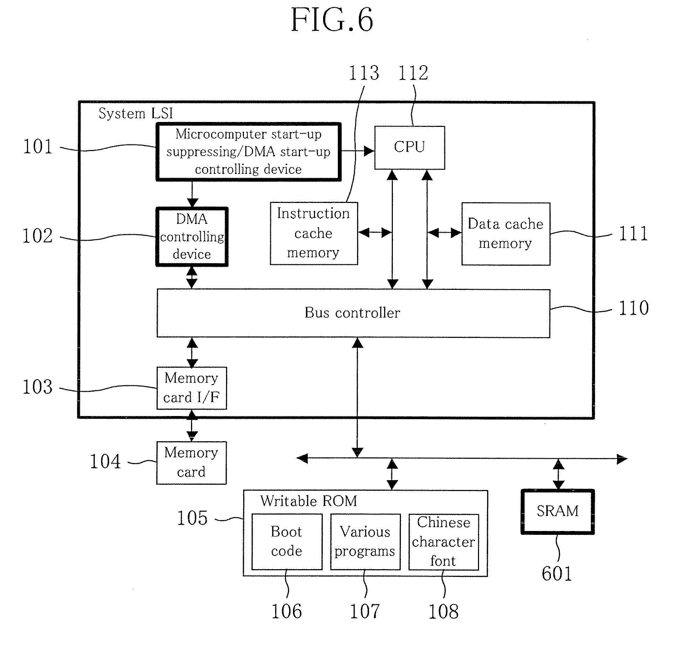

FIG. **6** is a block diagram showing a configuration of a memory writing device according to Embodiment 4 of the present invention. A difference from Embodiment 1 is that an SRAM device is provided. Hereinafter, like elements to those of Embodiment 1 will be denoted by like reference numerals, and only differences between these embodiments will be discussed below.

As shown in FIG. **6****,** an SRAM device **601** is connected to the bus controller **110** and is configured so that data can be written thereto by the DMA controlling device **102.**

Next, a procedure of writing a program by using the memory writing device of Embodiment 4 will be described.

First, when the power is turned ON and the reset is lifted after power-on, the CPU **112** enters a state where the start-up thereof is suppressed by the microcomputer start-up suppressing/DMA start-up controlling device **101.** At this point, the inside of the SRAM device **601,** which is arranged in an address space from which the start-up program of the CPU **112** should be read out, is in a blank state where the start-up program has not been written therein. The writable ROM **105** arranged in a different space is similarly in a blank state.

Next, the microcomputer start-up suppressing/DMA start-up controlling device **101** instructs the DMA controlling device **102** to start up a DMA process to thereby start a download of the start-up program.

Herein, a read address and a write address need to be initialized in the DMA controlling device **102** for a data transfer from the external memory card **104,** in which necessary programs such as a start-up program and application programs are written in advance, to the SRAM device **601.** In this process, the DMA controlling device **102** is set so as to transfer only the download program **305.**

After the DMA controlling device **102** starts up, data is transferred from the external memory card **104** to the SRAM device **601,** and the SRAM device **601** enters a state where only the download program **305** has been transferred thereto.

When the data transfer to the SRAM device **601** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts the suppression of the start-up of the CPU **112,** thereby entering a state where the start-up of the CPU **112** has started.

Then, based on the download program **305** written in the SRAM device **601,** the CPU **112** itself reads out the boot-up program **106,** the various programs **107** and the Chinese character font data **108,** which are stored in the external memory card **104,** and transfers them to the writable ROM **105,** thus entering a state where necessary data have been written in the writable ROM **105.**

When the data transfer to the writable ROM **105** is complete, the CPU **112** passes the control back to the boot-up program, thus entering a state where the boot-up has started, after which the process transitions to a state where application software has been started.

### <Embodiment 5>

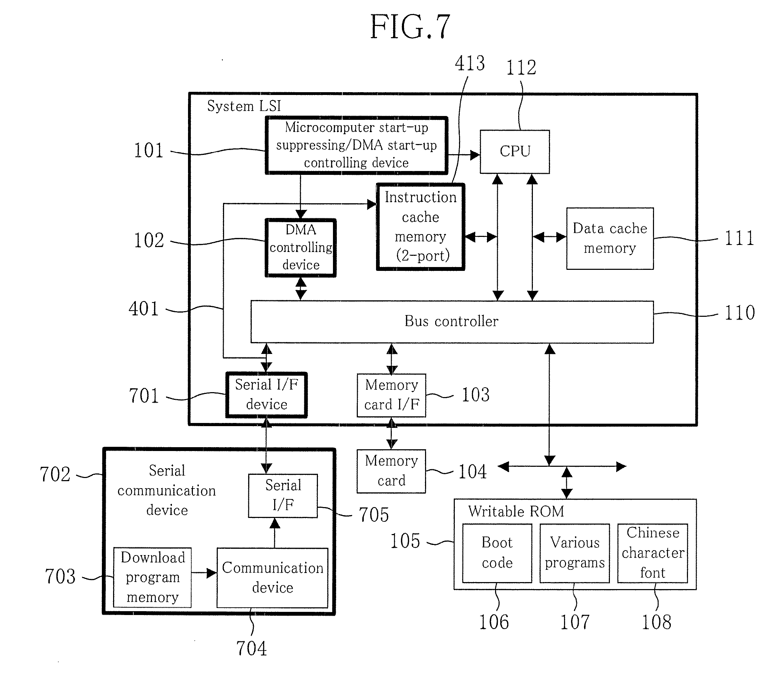

FIG. **7** is a block diagram showing a configuration of a memory writing device of Embodiment 5. A difference from Embodiment 1 is that a serial communication device is provided. Hereinafter, like elements to those of Embodiment 1 will be denoted by like reference numerals, and only differences between these embodiments will be discussed below.

As shown in FIG. **7****,** reference numeral **702** denotes a serial communication device, including a download program memory **703** for storing the download program, and a communication device **704** for transferring the download program via a serial I/F **705.**

Reference numeral **701** denotes a serial I/F device for data communications with the serial communication device **702.** The download program transmitted from the serial communication device **702** via the serial I/F device **701** is written in the instruction cache memory **413** via the data path **401**.

Next, a procedure of writing a program by using the memory writing device of Embodiment 5 will be described.

First, when the power is turned ON and the reset is lifted after power-on, the CPU **112** enters a state where the start-up thereof is suppressed by the microcomputer start-up suppressing/DMA start-up controlling device **101.** At this point, the inside of the instruction cache memory **413,** which is arranged in an address space from which the start-up program of the CPU **112** should be read out, is in a blank state where the start-up program has not been written therein. The writable ROM **105** is similarly in a blank state.

Next, the microcomputer start-up suppressing/DMA start-up controlling device **101** instructs the DMA controlling device **102** to start up a DMA process to thereby start a download of the start-up program.

Herein, a read address and a write address need to be initialized in the DMA controlling device **102** for a data transfer from the receiving data buffer of the serial I/F device **701** to the instruction cache memory **413.**

The serial I/F device **701** is such that a program on the download program memory **703** in the externally-connected serial communication device **702** is transferred thereto via the communication device **704** and the serial I/F **705,** and the DMA controlling device **102** is set so as to transfer only the download program **305.**

After the DMA controlling device **102** starts up, data is transferred from the serial I/F device **701** to the instruction cache memory **413** via the data path **401,** and the instruction cache memory **413** enters a state where only the download program **305** has been transferred thereto.

When the data transfer to the instruction cache memory **413** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts the suppression of the start-up of the CPU **112,** thereby entering a state where the start-up of the CPU **112** has started.

Then, based on the download program **305** written in the instruction cache memory **413,** the CPU **112** itself reads out the boot-up program **106,** the various programs **107** and the Chinese character font data **108,** which are stored in the external memory card **104,** and transfers them to the writable ROM **105,** thus entering a state where necessary data have been written in the writable ROM **105.**

When the data transfer to the writable ROM **105** is complete, the CPU **112** passes the control back to the boot-up program, thus entering a state where the boot-up has started, after which the process transitions to a state where application software has been started.

### <Embodiment 6>

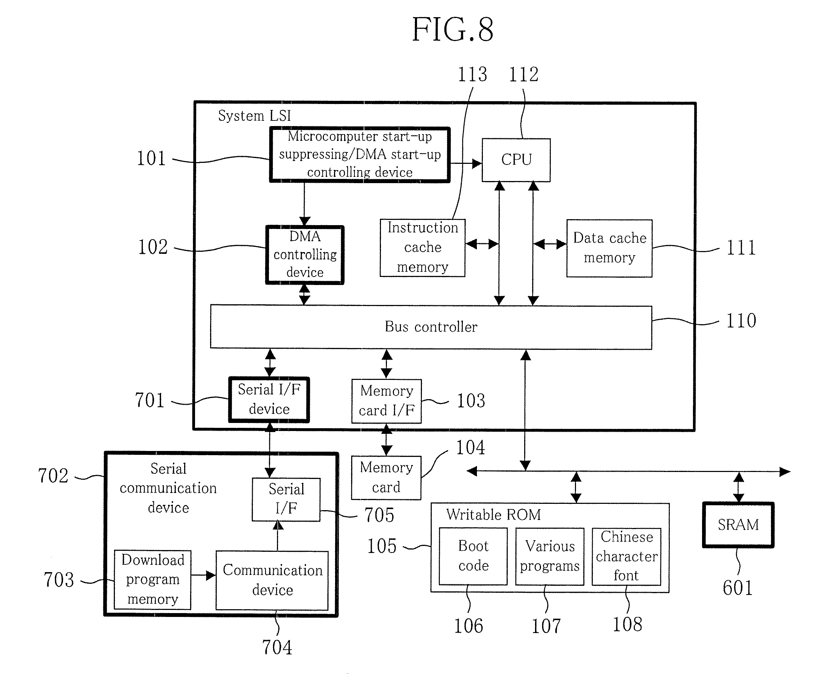

FIG. **8** is a block diagram showing a configuration of a memory writing device according to Embodiment 6 of the present invention. A difference from Embodiment 5 is that an SRAM device is provided additionally. Hereinafter, like elements to those of Embodiment 5 will be denoted by like reference numerals, and only differences between these embodiments will be discussed below.

As shown in FIG. **8****,** the SRAM device **601** is connected to the bus controller **110** and is configured so that data can be written thereto by the DMA controlling device **102.**

Next, a procedure of writing a program by using the memory writing device of Embodiment 6 will be described.

First, when the power is turned ON and the reset is lifted after power-on, the CPU **112** enters a state where the start-up thereof is suppressed by the microcomputer start-up suppressing/DMA start-up controlling device **101.** At this point, the inside of the SRAM device **601,** which is arranged in an address space from which the start-up program of the CPU **112** should be read out, is in a blank state where the start-up program has not been written therein. The writable ROM **105** arranged in a different space is similarly in a blank state.

Next, the microcomputer start-up suppressing/DMA start-up controlling device **101** instructs the DMA controlling device **102** to start up a DMA process to thereby start a download of the start-up program.

Herein, a read address and a write address need to be initialized in the DMA controlling device **102** for a data transfer from the receiving data buffer of the serial I/F device **701** to the instruction cache memory **113.**

The serial I/F device **701** is such that a program on the download program memory **703** in the externally-connected serial communication device **702** is transferred thereto via the communication device **704** and the serial I/F **705,** and the DMA controlling device **102** is set so as to transfer only the download program **305.**

After the DMA controlling device **102** starts up, data is transferred from the serial I/F device **701** to the SRAM device **601,** and the SRAM device **601** enters a state where only the download program **305** has been transferred thereto.

When the data transfer to the SRAM device **601** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts the suppression of the start-up of the CPU **112,** thereby entering a state where the start-up of the CPU 112 has started.

Then, based on the download program **305** written in the SRAM device **601,** the CPU **112** itself reads out the boot-up program **106,** the various programs **107** and the Chinese character font data **108**, which are stored in the external memory card **104**, and transfers them to the writable ROM **105,** thus entering a state where necessary data have been written in the writable ROM **105.**

When the data transfer to the writable ROM **105** is complete, the CPU **112** passes the control back to the boot-up program, thus entering a state where the boot-up has started, after which the process transitions to a state where application software has been started.

### <Embodiment 7>

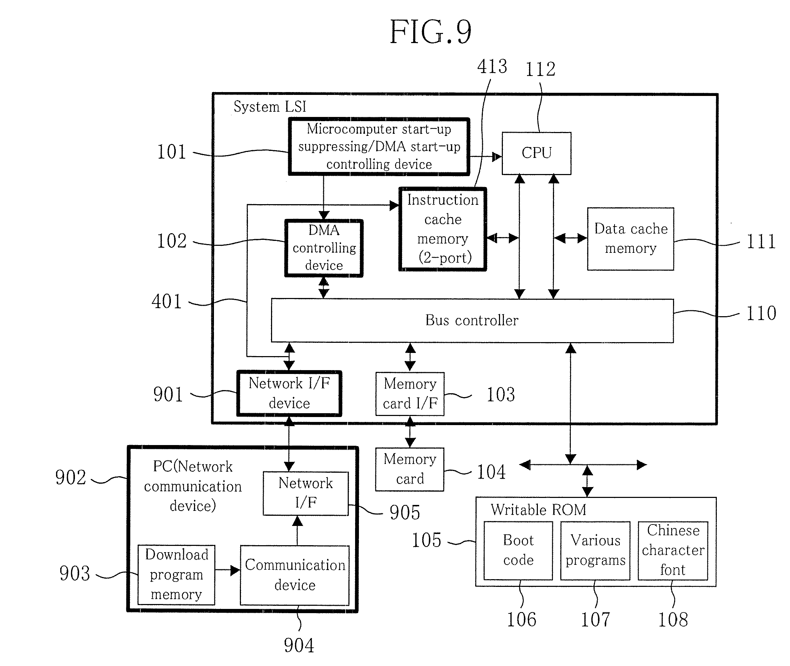

FIG. **9** is a block diagram showing a configuration of a memory writing device according to Embodiment 7 of the present invention. A difference from Embodiment 1 is that a network communication device is provided. Hereinafter, like elements to those of Embodiment 1 will be denoted by like reference numerals, and only differences between these embodiments will be discussed below.

As shown in FIG. **9****,** reference numeral **902** is a network communication device being a personal computer, or the like, including a download program memory **903** for storing a download program, and a communication device **904** for transferring the download program via a network I/F **905.**

Reference numeral **901** denotes a network I/F device for data communications with the network communication device **902.** The download program transmitted from the network communication device **902** via the network I/F device **901** is written in the instruction cache memory **413** via the data path **401.**

Next, a procedure of writing a program by using the memory writing device of Embodiment 7 will be described.

First, when the power is turned ON and the reset is lifted after power-on, the CPU **112** enters a state where the start-up thereof is suppressed by the microcomputer start-up suppressing/DMA start-up controlling device **101.** At this point, the inside of the instruction cache memory **413**, which is arranged in an address space from which the start-up program of the CPU **112** should be read out, is in a blank state where the start-up program has not been written therein. The writable ROM **105** is similarly in a blank state.

Next, the microcomputer start-up suppressing/DMA start-up controlling device **101** instructs the DMA controlling device **102** to start up a DMA process to thereby start a download of the start-up program.

Herein, a read address and a write address need to be initialized in the DMA controlling device **102** for a data transfer from the receiving data buffer of the network I/F device **901** to the instruction cache memory **413.**

The network I/F device **901** is such that a program on the download program memory **903** in the externally-connected network communication device **902** is transferred thereto via the communication device **904** and the network I/F **905,** and the DMA controlling device **102** is set so as to transfer only the download program **305.**

After the DMA controlling device **102** starts up, data is transferred from the network I/F device **901** to the instruction cache memory **413** via the data path **401,** and the instruction cache memory **413** enters a state where only the download program **305** has been transferred thereto.

When the data transfer to the instruction cache memory **413** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts the suppression of the start-up of the CPU **112,** thereby entering a state where the start-up of the CPU **112** has started.

Then, based on the download program **305** written in the instruction cache memory **413,** the CPU **112** itself reads out the boot-up program **106,** the various programs **107** and the Chinese character font data **108**, which are stored in the external memory card **104,** and transfers them to the writable ROM **105,** thus entering a state where necessary data have been written in the writable ROM **105.**

When the data transfer to the writable ROM **105** is complete, the CPU **112** passes the control back to the boot-up program, thus entering a state where the boot-up has started, and the process transitions to a state where application software has been started.

### <Embodiment 8>

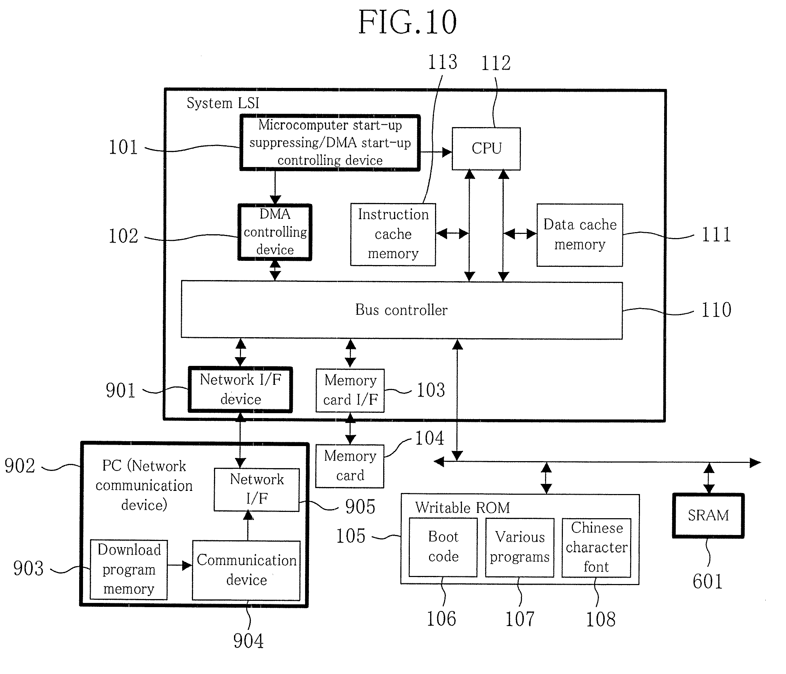

FIG. **10** is a block diagram showing a configuration of a memory writing device according to Embodiment 8 of the present invention. A difference from Embodiment 7 is that an SRAM device is provided additionally. Hereinafter, like elements to those of Embodiment 7 will be denoted by like reference numerals, and only differences between these embodiments will be discussed below.

As shown in FIG. **10****,** the SRAM device **601** is connected to the bus controller **110** and is configured so that data can be written thereto by the DMA controlling device **102.**

Next, a procedure of writing a program by using the memory writing device of Embodiment 8 will be described.

First, when the power is turned ON and the reset is lifted after power-on, the CPU **112** enters a state where the start-up thereof is suppressed by the microcomputer start-up suppressing/DMA start-up controlling device **101.** At this point, the inside of the SRAM device **601,** which is arranged in an address space from which the start-up program of the CPU **112** should be read out, is in a blank state where the start-up program has not been written therein. The writable ROM **105** arranged in a different space is similarly in a blank state.

Next, the microcomputer start-up suppressing/DMA start-up controlling device **101** instructs the DMA controlling device **102** to start up a DMA process to thereby start a download of the start-up program.

Herein, a read address and a write address need to be initialized in the DMA controlling device **102** for a data transfer from the receiving data buffer of the network I/F device **901** to the instruction cache memory **113.**

The network I/F device **901** is such that a program on the download program memory **903** in the externally-connected network communication device **902** is transferred thereto via the communication device **904** and the network I/F **905,** and the DMA controlling device **102** is set so as to transfer only the download program **305.**

After the DMA controlling device **102** starts up, data is transferred from the network I/F device **901** to the SRAM device **601,** and the SRAM device **601** enters a state where only the download program **305** has been transferred thereto.

When the data transfer to the SRAM device **601** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts the suppression of the start-up of the CPU **112,** thereby entering a state where the start-up of the CPU **112** has started.

Then, based on the download program **305** written in the SRAM device **601,** the CPU **112** itself reads out the boot-up program **106,** the various programs **107** and the Chinese character font data **108,** which are stored in the external memory card **104,** and transfers them to the writable ROM **105,** thus entering a state where necessary data have been written in the writable ROM **105.**

When the data transfer to the writable ROM **105** is complete, the CPU **112** passes the control back to the boot-up program, thus entering a state where the boot-up has started, and the process transitions to a state where application software has been started.

### <Embodiment 9>

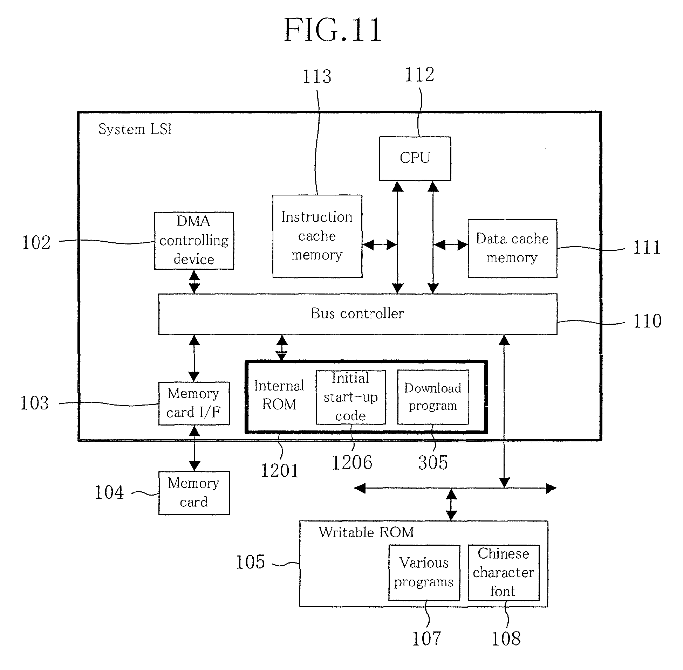

FIG. **11** is a block diagram showing a configuration of a memory writing device according to Embodiment 9 of the present invention. The memory writing device of FIG. **11** includes the DMA controlling device **102,** the memory card I/F **103** for exchanging data with the inserted external memory card **104,** the bus controller **110** for performing a control so as to transfer data read out by the memory card I/F **103** to the writable ROM **105,** the data cache memory **111,** the CPU **112** for executing instructions, the instruction cache memory **113,** and an internal ROM **1201** connected to the bus controller **110.**

The DMA controlling device **102** is a device for transferring necessary programs, such as a start-up program and application programs, recorded on the external memory card **104.**

Although the various programs **107** and the Chinese character font data **108** are already written in the writable ROM **105** in FIG. **11**, the writable ROM **105** is initially in a blank state.

An initial start-up program **1206** (initial start-up code) and the download program **305** are stored in the internal ROM **1201.**

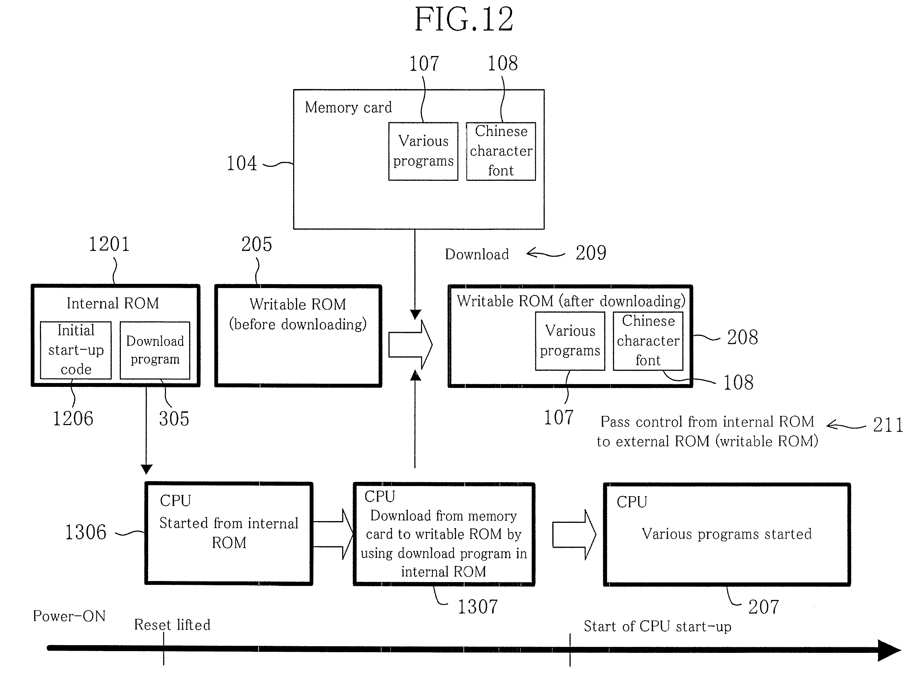

Next, a procedure of writing a program by using the memory writing device of Embodiment 9 will be described with reference to FIG. **12****.**

First, when the power is turned ON and the reset is lifted after power-on, the CPU **112** enters a state **1306** where the start-up thereof has been started by the initial start-up program **1206** stored in the internal ROM **1201** arranged in an address space from which the start-up program of the CPU **112** should be read out.

Then, based on the download program **305** stored in the internal ROM **1201,** the CPU **112** itself, whose initial start-up has been started, reads out the various programs **107** and the Chinese character font data **108,** which are stored in the external memory card **104,** and starts transferring **1307** them to the writable ROM **105.** Thus, the process enters a state **208** where necessary data have been written in the writable **ROM 105.**

When the data transfer to the writable ROM **105** is complete, the CPU **112** passes the control from the internal ROM **1201** to the writable ROM **105,** and enters a state **207** where application software has been started.

In order to pass the control from the internal ROM **1201** to the writable ROM **105** immediately after the completion of the download, the download program **305** needs to be so programmed in advance.

### <Embodiment 10>

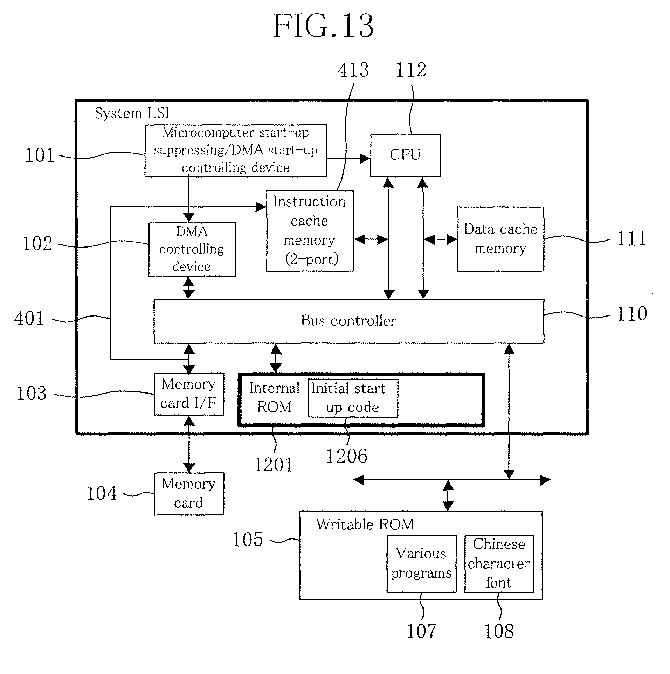

FIG. **13** is a block diagram showing a configuration of a memory writing device according to Embodiment 10 of the present invention. A difference from Embodiment 3 is that the internal ROM **1201** is provided. Hereinafter, like elements to those of Embodiment 3 will be denoted by like reference numerals, and only differences between these embodiments will be discussed below.

As shown in FIG. **13****,** the initial start-up program **1206** (initial start-up code) is stored in the internal ROM **1201.**

Although the various programs **107** and the Chinese character font data **108** are already written in the writable ROM **105** in FIG. **13****,** the writable ROM **105** is initially in a blank state.

Next, a procedure of writing a program by using the memory writing device of Embodiment 10 will be described.

First, when the power is turned ON and the reset is lifted after power-on, the CPU **112** enters a state where the start-up thereof is suppressed by the microcomputer start-up suppressing/DMA start-up controlling device **101.** At this point, the inside of the writable ROM **105** is in a blank state where programs to be read out have not been written therein. The instruction cache memory **413** is similarly in a blank state.

Next, the microcomputer start-up suppressing/DMA start-up controlling device **101** instructs the DMA controlling device **102** to start up a DMA process.

Herein, a read address and a write address need to be initialized in the DMA controlling device **102** for a data transfer from the external memory card **104,** in which necessary programs such as the download program **305** and application programs are written in advance, to the instruction cache memory **113.** In this process, the DMA controlling device **102** is set so as to transfer only the download program **305.**

After the DMA controlling device **102** starts up, data is transferred from the external memory card **104** to the instruction cache memory **413** via the data path **401,** and the instruction cache memory **413** enters a state where only the download program **305** has been transferred thereto.

When the data transfer to the instruction cache memory **413** is complete, the DMA controlling device **102** notifies the microcomputer start-up suppressing/DMA start-up controlling device **101** of the completion of the data transfer. Then, the microcomputer start-up suppressing/DMA start-up controlling device **101** lifts the suppression of the start-up of the CPU **112,** thereby entering a state where the start-up of the CPU **112** has been started by the initial start-up program **1206** stored in the internal ROM **1201.**

Then, based on the download program **305** stored in the instruction cache memory **413,** the CPU **112** itself, whose initial start-up has been started, reads out the various programs **107** and the Chinese character font data **108,** which are stored in the external memory card **104,** and transfers them to the writable ROM **105,** thus entering a state where necessary data have been written in the writable ROM **105.**

When the data transfer to the writable ROM **105** is complete, the CPU **112** passes the control from the internal ROM **1201** to the writable ROM **105,** and then enters a state where application software has been started.

### <Embodiment 11>

Next, a procedure of writing a program by using the memory writing device of Embodiment 11 will be described. The device configuration of the memory writing device of Embodiment 11 is the same as that of Embodiment 10, and will therefore be described below with reference to FIG. **13****.**

First, when the power is turned ON and the reset is lifted after power-on, the CPU **112** enters a state where the initial start-up of the CPU **112** has been started by the initial start-up program **1206,** which is stored in the internal ROM **1201** arranged in an address space from which the start-up program of the CPU **112** should be read out.

At this point, the inside of the writable ROM **105** is in a blank state where programs to be read out have not been written therein. The instruction cache memory **413** is similarly in a blank state.

Next, the CPU **112**, whose initial start-up has been started, initializes the DMA controlling device **102.** Specifically, a read address and a write address are initialized for transferring only the download program **305** from the external memory card **104,** in which necessary programs such as the download program **305** and application programs are written in advance, to the instruction cache memory **413.**

Then, after the initialization of the DMA controlling device **102,** the DMA controlling device **102** is instructed to start up a DMA process.

After the DMA controlling device **102** starts up, data is transferred from the external memory card **104** to the instruction cache memory **413** via the data path **401,** and the instruction cache memory **413** enters a state where only the download program **305** has been transferred thereto.

When the data transfer to the instruction cache memory **413** is complete, based on the download program **305** written in the instruction cache memory **413,** the CPU **112** itself reads out the various programs **107** and the Chinese character font data **108,** which are stored in the external memory card **104,** and transfers them to the writable ROM **105,** thus entering a state where necessary data have been written in the writable ROM **105.**

When the data transfer to the writable ROM **105** is complete, the CPU **112** passes the control to the writable ROM **105,** and then enters a state where application software has been started.

In order to pass the control to the writable ROM **105** immediately after the completion of the download, the download program **305** needs to be so programmed in advance.

### INDUSTRIAL APPLICABILITY

As described above, the present invention is very useful and has a very high industrial applicability because it provides a highly practical effect of making it possible to download necessary programs to a blank writable ROM, which is mounted on the substrate, while suppressing the cost increase.

## Claims

1. A memory writing device for writing a program to be executed by a CPU in a blank writable ROM mounted on a substrate, comprising:
a memory card I/F device for reading the program, which is pre-recorded on an external memory card;
a CPU start-up control section for suppressing and controlling start-up of the CPU; and
a DMA device for transferring, in a DMA transfer, the program read by the memory card I/F device before the start-up of the CPU.

2. The memory writing device of claim 1, wherein:
the program recorded on the external memory card includes a download program executable by the CPU;
before the start-up of the CPU, only the download program, among other programs, is written in the writable ROM by the DMA device; and
after the start-up of the CPU, the CPU executes the download program, whereby remaining programs recorded on the external memory card are written in the writable ROM.

3. The memory writing device of claim 1, further comprising a 2-port-control cache memory to/from which data can be written/read out by the CPU and to which data can be written by the DMA device, wherein:
the program recorded on the external memory card includes a download program executable by the CPU;
before the start-up of the CPU, only the download program, among other programs, is written in the cache memory by the DMA device; and
after the start-up of the CPU, the CPU executes the download program, whereby remaining programs recorded on the external memory card are written in the writable ROM.

4. The memory writing device of claim 1, further comprising an externally-connected SRAM device, wherein:
the program recorded on the external memory card includes a download program executable by the CPU;
before the start-up of the CPU, only the download program, among other programs, is written in the SRAM device by the DMA device; and
after the start-up of the CPU, the CPU executes the download program, whereby remaining programs recorded on the external memory card are written in the writable ROM.

5. The memory writing device of claim 1, further comprising:
a 2-port-control cache memory to/from which data can be written/read out by the CPU and to which data can be written by the DMA device;
a serial communication device including a memory storing a download program executable by the CPU and a communication device for transmitting the program via a serial I/F; and
a serial I/F device for data communications with the serial communication device, wherein:
before the start-up of the CPU, the download program, transmitted from the serial communication device via the serial I/F device, is written in the cache memory by the DMA device; and
after the start-up of the CPU, the CPU executes the download program, whereby programs recorded on the external memory card are written in the writable ROM.

6. The memory writing device of claim 1, further comprising:
an externally-connected SRAM device;
a serial communication device including a memory storing a download program executable by the CPU and a communication device for transmitting the program via a serial I/F; and
a serial I/F device for data communications with the serial communication device, wherein:
before the start-up of the CPU, the download program, transmitted from the serial communication device via the serial I/F device, is written in the SRAM device by the DMA device; and
after the start-up of the CPU, the CPU executes the download program, whereby programs recorded on the external memory card are written in the writable ROM.

7. The memory writing device of claim 1, further comprising:
a 2-port-control cache memory to/from which data can be written/read out by the CPU and to which data can be written by the DMA device;
a network communication device including a memory storing a download program executable by the CPU and a communication device for transmitting the program via a network I/F; and
a serial I/F device for data communications with the network communication device, wherein:
before the start-up of the CPU, the download program, transmitted from the network communication device via the network I/F device, is written in the cache memory by the DMA device; and
after the start-up of the CPU, the CPU executes the download program, whereby programs recorded on the external memory card are written in the writable ROM.

8. The memory writing device of claim 1, further comprising:
an externally-connected SRAM device;
a network communication device including a memory storing a download program executable by the CPU and a communication device for transmitting the program via a network I/F; and
a serial I/F device for data communications with the network communication device, wherein:
before the start-up of the CPU, the download program, transmitted from the network communication device via the network I/F device, is written in the cache memory by the DMA device; and
after the start-up of the CPU, the CPU executes the download program, whereby programs recorded on the external memory card are written in the writable ROM.

9. A memory writing device for writing a program to be executed by a CPU in a blank writable ROM mounted on a substrate, comprising:
a memory card I/F device for reading the program, which is pre-recorded on an external memory card; and
an internal ROM storing an initial start-up program needed for initial start-up of the CPU and a download program executable by the CPU, wherein:
the CPU is initially started up based on the initial start-up program recorded on the internal ROM; and
after the initial start-up of the CPU, the CPU executes the download program, whereby programs recorded on the external memory card are written in the writable ROM.

10. The memory writing device of claim 3, further comprising an internal ROM storing an initial start-up program needed for initial start-up of the CPU, wherein:
before the start-up of the CPU, only the download program, among other programs, is written in the cache memory by the DMA device;
the CPU is initially started up based on the initial start-up program recorded on the internal ROM; and
after the initial start-up of the CPU, the CPU executes the download program, whereby remaining programs recorded on the external memory card are written in the writable ROM.

11. A memory writing device for writing a program to be executed by a CPU in a blank writable ROM mounted on a substrate, comprising:
a memory card I/F device for reading the program, which is pre-recorded on an external memory card;
a DMA device for transferring, in a DMA transfer, the program read by the memory card I/F device;
a 2-port-control cache memory to/from which data can be written/read out by the CPU and to which data can be written by the DMA device; and
an internal ROM storing an initial start-up program needed for initial start-up of the CPU, wherein:
the program recorded on the external memory card includes a download program executable by the CPU;
the CPU is initially started up based on the initial start-up program recorded on the internal ROM;
after the initial start-up of the CPU, the DMA device is initialized by the CPU, after which the DMA device is started up;
only the download program, among other programs, is written in the cache memory by the DMA device; and
after the start-up of the CPU, the CPU executes the download program, whereby remaining programs recorded on the external memory card are written in the writable ROM.
